# FASCICULE DE BREVET EUROPEEN

(11) **EP 1 752 207 B1**
(45) Date de publication et mention de la délivrance du brevet: **16.09.2009**
(21) Numéro de dépôt: 06116658.3
(22) Date de dépôt: 05.07.2006
(51) Int. Cl.: B01D 63/06, B01D 35/26, B01D 29/25, B01D 29/56

(54) **Dispositif de filtration intégrant une boucle et une pompe de circulation**
Filtervorrichtung mit integriertem Umlaufsystem und Umlaufpumpe
Filtration device incorporating a circulation loop and a circulation pump

(30) Priorité: 29.07.2005 FR 0508131
(43) Date de publication de la demande: 14.02.2007
(73) Titulaire: Societé Industrielle de la Vallée de L' Aigues S.I.V.A., 26110 Nyons (FR)
(72) Inventeur: Lescoche, Philippe, 84110, FAUCON (FR)
(74) Mandataire: Le Cacheux, Samuel L.R.

(56) Documents cités:
- WO-A-01/96003
- US-A- 4 702 842
- US-B1- 6 547 965
- PATENT ABSTRACTS OF JAPAN vol. 1998, no. 09, 31 juillet 1998 (1998-07-31) & JP 10 109022 A (TOSHIBA CERAMICS CO LTD), 28 avril 1998 (1998-04-28)

## Description

La présente invention concerne le domaine technique de la séparation moléculaire ou particulaire mettant en oeuvre des éléments de séparation appelés généralement membranes, adaptés pour assurer la séparation des molécules ou des particules contenues dans un milieu fluide à traiter.

L'objet de l'invention trouve une application particulièrement avantageuse dans le domaine de la filtration au sens général d'un milieu fluide à traiter, et en particulier de la nanofiltration, de l'ultrafiltration, de la microfiltration, etc.

Dans l'état de la technique, il est connu de nombreuses variantes de réalisation d'une installation de filtration pour un fluide à traiter. Par exemple, une installation de filtration comporte au moins un et généralement deux dispositifs de filtration comportant chacun dans une enveloppe, une série d'éléments de filtration de forme tubulaire s'étendant parallèlement les uns aux autres, et montés de manière étanche à chacune de leurs extrémités sur une plaque de positionnement. Chaque élément de filtration comporte au moins un canal de circulation pour le fluide à traiter. Les éléments de filtration assurent la filtration tangentielle du fluide, en vue d'obtenir à la surface périphérique des éléments de filtration, la sortie du filtrat destiné à être récupéré dans un volume de collecte situé entre les plaques de positionnement et l'enveloppe.

Les deux dispositifs de filtration sont montés en série à l'intérieur d'une boucle de circulation dans laquelle une pompe de circulation est reliée aux dispositifs de filtration par l'intermédiaire d'une canalisation d'amenée du fluide à traiter et d'une canalisation de retour récupérant le fluide ayant circulé à l'intérieur des éléments de filtration et appelé rétentat. La pompe de circulation permet d'assurer la circulation du fluide à traiter à grande vitesse à l'intérieur des éléments de filtration tendant à générer une contrainte de cisaillement qui redisperse les matières déposées sur la surface des canaux de la membrane.

Il doit être considéré que ce principe de décolmatage est réalisé à l'intérieur d'une boucle de circulation qui comprend deux dispositifs de filtration montés en série et les canalisations d'amenée et de retour du fluide à traiter. Cette installation donne satisfaction au niveau du traitement du fluide. Toutefois, une telle installation présente un coût de fabrication relativement important compte tenu de la réalisation d'une boucle de circulation nécessitant la mise en oeuvre de diverses canalisations et raccords. De plus, une telle installation présente un encombrement relativement important.

Pour tenter de remédier à ces inconvénients, la demande de brevet EP 0 217 568 propose un dispositif de filtration comportant, dans un carter, une série d'éléments de filtration de forme tubulaire s'étendant parallèlement les uns aux autres en traversant, de manière étanche, à chacune de leurs extrémités une plaque de positionnement. Les éléments de filtration comportent chacun au moins un canal de circulation pour le fluide à traiter et assurent la filtration dudit fluide en vue d'obtenir, à la surface périphérique des éléments de filtration, la sortie du filtrat destiné à être récupéré dans un volume de collecte situé entre les plaques de positionnement et le carter. L'une des extrémités des éléments de filtration débouche dans une chambre de communication qui assure la communication entre un circuit aller et un circuit retour pour le fluide à traiter circulant dans deux séries distinctes d'éléments de filtration. Cette boucle de circulation intégrée est reliée extérieurement à une pompe de circulation pour le fluide à traiter. Un tel dispositif nécessite ainsi un raccordement avec une pompe de circulation extérieure, ce qui augmente son coût de fabrication et son encombrement.

La demande de brevet WO 01/96 003 vise à proposer un dispositif de filtration intégrant dans la boucle de circulation, une pompe de circulation. Un tel dispositif de filtration comporte une pièce de séparation montée dans une première chambre de communication dans laquelle débouche l'une des extrémités des éléments de filtration tandis que l'autre des extrémités des éléments de filtration débouchent dans une seconde chambre de communication. La turbine d'une pompe de circulation est montée à l'intérieur de la pièce de séparation qui divise les membranes en une première et une deuxième séries formant les circuits aller et retour d'une boucle de circulation.

La seconde chambre de communication comporte l'entrée et la sortie pour le fluide à traiter qui traverse, sous l'effet de l'aspiration de la pompe, les membranes d'une série formant le circuit aller. La pompe refoule le fluide ayant traversé la première série vers les membranes de la série formant le circuit retour.

Un tel dispositif peut présenter un inconvénient dans certaines conditions de fonctionnement. En partant du principe que la valeur de la perte de charge dans chaque circuit aller ou retour, consécutive à la vitesse de circulation du fluide, est égale à ΔP, la pompe de circulation ajoute deux fois la perte de charge (circuit aller et retour) à la valeur de la pression d'alimentation Pa pour assurer la circulation du fluide dans la boucle de circulation. La pression à la sortie du circuit aller, correspondant aussi à l'aspiration de la pompe de circulation, est égale à Pa ― ΔP. Au refoulement de la pompe de circulation, la pression est égale à Pa + ΔP. Il est à noter que la pression à l'aspiration est égale à Pa ― ΔP. Aussi, en fonction des valeurs de Pa et de ΔP, une telle pression à l'aspiration peut prendre une valeur négative, ce qui signifie que les éléments de filtration peuvent aspirer du filtrat. Il s'ensuit une perte inévitable de rendement sur la quantité de liquide filtré.

De même, le brevet US 4 702 842 décrit un appareil de filtration équipé d'une entrée pour le fluide à traiter qui est située entre la sortie de la pompe de circulation et l'entrée du circuit aller de la boucle de circulation. Un tel appareil possède ainsi les mêmes inconvénients que le dispositif de filtration décrit ci-dessus. En effet, compte tenu de ce principe, la pression du fluide à l'entrée doit être supérieure à la pression de sortie de la pompe de circulation, ce qui limite le fonctionnement d'un tel appareil.

L'objet de l'invention vise donc à remédier aux inconvénients de la technique antérieure en proposant un dispositif pour la filtration tangentielle d'un fluide à traiter, conçu pour présenter un coût de fabrication réduit et un encombrement limité, tout en conservant un débit de filtration important.

Pour atteindre un tel objectif, l'objet de l'invention concerne un dispositif pour la filtration tangentielle d'un fluide à traiter destiné à être réparti en un filtrat et en un rétentat, le dispositif comportant, dans un carter :
■ au moins une entrée pour le fluide à traiter,
■ au moins une sortie d'évacuation du rétentat,
■ une série d'éléments de filtration de forme tubulaire s'étendant parallèlement les uns aux autres en traversant de manière étanche, à chacune de leurs extrémités, une plaque de positionnement, les éléments de filtration comportant chacun au moins un canal de circulation pour le fluide à traiter et assurant la filtration dudit fluide, en vue d'obtenir, à la surface périphérique des éléments de filtration, la sortie du filtrat destiné à être récupéré dans un volume de collecte situé entre les plaques de positionnement et le carter,
■ au moins une sortie pour le filtrat communiquant avec le volume de collecte du filtrat,
■ une première chambre de communication dans laquelle débouche l'une des extrémités des éléments de filtration et dans laquelle sont montés des moyens de séparation, en contact étanche avec la plaque de positionnement voisine, pour diviser ladite chambre en des premier et deuxième volumes délimités respectivement à l'intérieur et à l'extérieur des moyens de séparation et communiquant avec, respectivement, une première série et une deuxième série d'éléments de filtration formant des circuits aller et retour d'une boucle de circulation pour le fluide à traiter, les moyens de séparation comportant un passage de communication, entre le deuxième volume et le premier volume, à l'intérieur duquel est montée une turbine d'une pompe de circulation, munie d'un axe d'entraînement s'étendant à l'extérieur de la première chambre pour être reliée à un moteur d'entraînement,
■ et une deuxième chambre de communication dans laquelle débouche l'autre des extrémités des éléments de filtration et assurant une communication pour le fluide à traiter, entre les éléments de filtration de la première série et ceux de la deuxième série.

Selon l'invention, l'entrée pour le fluide à traiter débouche dans la première chambre de communication du carter entre la turbine de la pompe de circulation et les éléments de filtration de la série formant le circuit retour de la boucle de circulation.

Selon une première variante de réalisation, le moteur d'entraînement de la pompe est piloté de manière que les éléments de filtration de la deuxième série, alimentés par le deuxième volume forment le circuit aller, tandis que les éléments de filtration de la première série, débouchant dans le premier volume, forment le circuit retour et en ce que l'entrée pour le fluide à traiter débouche dans le premier volume de la première chambre entre la sortie des éléments de filtration de la première série et la turbine montée à l'intérieur des moyens de séparation.

Selon une deuxième variante de réalisation, le moteur d'entraînement de la pompe est piloté de manière que les éléments de filtration de la première série, alimentés par le premier volume, forment le circuit aller, tandis que les éléments de filtration de la deuxième série, débouchant dans le deuxième volume, forment le circuit retour et en ce que l'entrée pour le fluide à traiter débouche dans le deuxième volume de la première chambre délimitée à l'extérieur des moyens de séparation entre la sortie des éléments de filtration de la deuxième série et la turbine montée à l'intérieur des moyens de séparation.

Avantageusement, les moyens de séparation sont montés à l'intérieur d'un boîtier pour la pompe, monté sur une plaque de positionnement.

Selon un exemple de réalisation, les moyens de séparation comportent au moins un stator tubulaire, à l'intérieur duquel est montée la turbine de la pompe.

Avantageusement, le stator tubulaire est fixé de manière étanche sur la plaque de positionnement voisine.

De préférence, le stator tubulaire est prolongé par un corps tubulaire monté, de manière étanche, sur la plaque de positionnement voisine.

Selon un autre exemple de réalisation, le corps tubulaire est équipé d'une collerette de montage à l'intérieur du boîtier, cette collerette étant pourvue de passages pour le fluide.

Dans une forme préférée de réalisation, l'entrée pour le fluide à traiter comporte un élément tubulaire traversant le boîtier et le stator tubulaire pour être accessible à l'extérieur du carter et déboucher à l'intérieur des moyens de séparation.

Par exemple, l'entrée pour le fluide à traiter comporte un raccord tubulaire traversant le boîtier pour être accessible à l'extérieur du carter et déboucher à l'extérieur des moyens de séparation.

Selon une autre caractéristique de l'invention, la deuxième chambre de communication est délimitée, entre un fond de fermeture et la plaque de positionnement ne délimitant pas la première chambre de communication, cette deuxième chambre assurant la récupération du fluide à traiter ayant circulé dans le circuit aller et l'alimentation en fluide pour le circuit retour.

Par exemple, le fond de fermeture, qui délimite la deuxième chambre de communication, est équipé de la sortie d'évacuation du rétentat.

Selon un exemple de réalisation, les plaques de positionnement sont reliées entre elles par l'intermédiaire d'une virole délimitant le volume de collecte du filtrat, la virole étant équipée d'au moins une sortie pour le filtrat.

De préférence, le carter comporte la virole, le boîtier pour la pompe et le fond de fermeture.

Selon un exemple préféré de réalisation, les moyens de séparation sont montés de manière que les première et deuxième séries d'éléments de filtration comportent un nombre sensiblement égal d'éléments de filtration.

Par exemple, l'axe d'entraînement est monté dans l'alignement de l'axe de la virole et en ce que le moteur d'entraînement est supporté par le boîtier.

Selon une autre variante de réalisation, la sortie d'évacuation du rétentat est aménagée pour communiquer avec la première chambre de communication.

Avantageusement, la sortie d'évacuation du rétentat communique soit avec le premier volume de ladite chambre en traversant le boîtier et les moyens de séparation, soit avec le deuxième volume de ladite chambre.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en coupe longitudinale d'un premier exemple de réalisation d'un dispositif conforme à l'invention.

La **fig. 2** est une vue en coupe transversale prise sensiblement selon les lignes **II-II** de la **fig. 1****.**

La **fig. 3** est une vue en coupe élévation partielle d'un deuxième exemple de réalisation d'un dispositif conforme à l'invention.

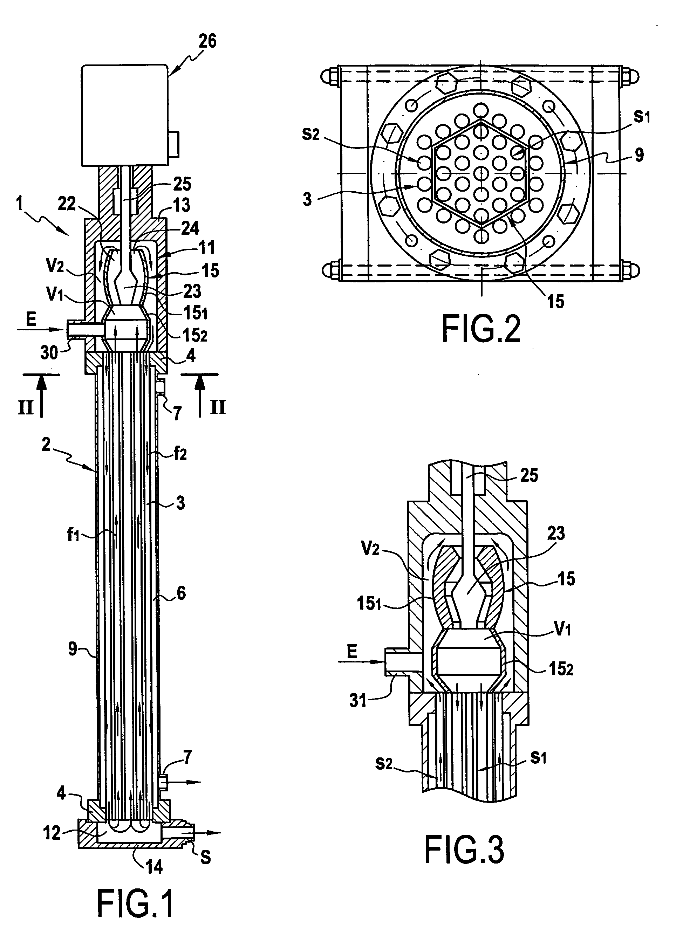

Les **fig. 1** et **2** illustrent un dispositif ou module **1** assurant la filtration tangentielle pour un fluide à traiter pouvant être de toute nature. Le dispositif **1** comporte, dans un carter **2,** une série d'éléments de filtration **3** de forme tubulaire s'étendant parallèlement les uns aux autres. Chaque élément de filtration **3** possède une forme extérieure de section droite transversale, par exemple hexagonale ou circulaire. Chaque élément de filtration **3** comporte au moins un canal réalisé parallèlement à l'axe longitudinal de l'élément de filtration. La surface des canaux est recouverte par au moins une couche séparatrice, non représentée, destinée à être en contact avec le milieu fluide à traiter circulant à l'intérieur des canaux. La nature de la ou des couches séparatrices est choisie en fonction du pouvoir de séparation ou de filtration à obtenir.

Les éléments de filtration **3** sont montés, à chacune de leurs extrémités, sur une plaque de positionnement **4** montée à l'intérieur du carter **2.** De manière classique, chaque plaque de positionnement **4** comporte un trou permettant le passage de l'extrémité d'un élément de filtration tubulaire **3.** Chaque trou est équipé d'un joint d'étanchéité permettant d'assurer un montage étanche des éléments de filtration **3** sur les plaques de positionnement **4.** Les plaques de positionnement **4** définissent, entre elles et avec le carter **2,** un volume de collecte **6** pour le filtrat sortant de la surface périphérique des éléments de filtration **3.** Ce volume de collecte **6** communique, par au moins une et, dans l'exemple illustré, deux sorties **7** d'évacuation du filtrat. Dans l'exemple illustré, chaque sortie **7** pour le filtrat est constituée par un tronçon de canalisation raccordé sur une virole **9** constituant, en partie, le carter **2** et à chaque extrémité de laquelle sont montées les plaques de positionnement **4.** La virole **9** délimite ainsi, avec les plaques de positionnement **4,** le volume de collecte **6.**

Le dispositif de filtration **1** comporte, également, une première chambre de communication **11** aménagée dans le carter **2** et dans laquelle débouche, au-delà de la plaque de positionnement **4,** l'une des extrémités des éléments de filtration **3,** tandis que l'autre extrémité des éléments de filtration **3** débouche au-delà de l'autre plaque de filtration **4,** dans une deuxième chambre de communication **12.** Tel que cela apparaît plus précisément à la **fig. 1****,** la première chambre **11** est délimitée à l'intérieur d'un boîtier de fermeture **13** raccordé à la virole **9** et/ou à la plaque de positionnement **4,** tandis que la deuxième chambre de communication **12** est délimitée entre la plaque de positionnement voisine **4** et un fond de fermeture **14** monté sur la virole **9** et/ou la plaque de positionnement **4.** Ainsi, le carter **2** est constitué par la virole **9,** le boîtier **13** et le fond de fermeture **14.**

Le dispositif **1** comporte des moyens de séparation **15** montés dans la première chambre de communication **11,** afin de diviser cette première chambre, d'une part, en un premier volume **V₁,** communiquant avec une première série **s₁** d'éléments de filtration **3,** parcouru par le fluide à traiter selon un premier sens représenté par la flèche **f₁** et, d'autre part, en un deuxième volume **V₂** communiquant avec une seconde série **s₂** d'éléments de filtration **3** traversés par le fluide selon un deuxième sens **f₂** contraire au premier sens **f₁.** Les moyens de séparation **15** sont montés de manière étanche sur la plaque de positionnement **4** voisine, de manière à diviser le volume de la première chambre **11** en un premier volume **V₁** et en un deuxième volume **V₂,** situés, respectivement, à l'intérieur et à l'extérieur des moyens de séparation. Il doit être compris que les éléments de filtration **3,** appartenant à la première série, sont différents des éléments de filtration **3** de la seconde série **s₂.** Selon une caractéristique préférée de réalisation, les moyens de séparation **15** sont montés de manière que les séries **s₁, s₂** des éléments de filtration **3** comportent un nombre sensiblement égal d'éléments de filtration **3.**

Selon cet exemple, les éléments de filtration **3,** appartenant à la première série **s₁,** sont situés à l'intérieur de l'enveloppe virtuelle prolongeant les moyens de séparation **15,** tandis que les éléments de filtration **3,** appartenant à la deuxième série **s₂**, sont situés à l'extérieur de cette enveloppe virtuelle. Il doit être compris que les éléments de filtration **3** des première série **s₁** et deuxième série **s₂** forment les circuits aller et retour d'une boucle de circulation pour le fluide à traiter, réalisée à l'intérieur du carter. Dans l'exemple illustré à la **fig. 1****,** les éléments de filtration de la deuxième série **s₂** forment le circuit aller, tandis que les éléments de filtration de la première série **s₁** forment le circuit retour.

Les moyens de séparation **15** délimitent intérieurement un logement **22** pour une turbine **23** d'une pompe de circulation. Les moyens de séparation **15,** qui seront décrits en détail dans la suite de la description, se présentent sous une forme tubulaire ou cylindrique et sont montés, de manière étanche, sur la plaque de positionnement voisine **4.** Les moyens de séparation **15** délimitent intérieurement le premier volume **V₁** et extérieurement par rapport au boîtier de fermeture **13,** le deuxième volume **V₂.** Le boîtier de fermeture **13** peut être fixé à la plaque de positionnement **4** par l'intermédiaire de moyens d'assemblage. Les moyens de séparation **15** comportent un passage de communication **24** assurant le passage du fluide à traiter entre les volumes **V₁, V₂.** La turbine **23** comporte un axe d'entraînement **25,** relié à un moteur d'entraînement en rotation **26** monté sur le boîtier de fermeture **13.** De préférence, l'axe d'entraînement **25** est monté dans l'alignement de l'axe de la virole **9** dans laquelle les éléments de filtration **3** sont répartis régulièrement suivant l'axe de la virole. Bien entendu, le boîtier de fermeture **13** comporte un passage étanche pour l'arbre d'entraînement **25.**

Dans l'exemple illustré à la **fig. 1****,** il est considéré que le moteur **26** d'entraînement de la pompe fonctionne en mode aspiration. La turbine permet, d'une part, d'aspirer le fluide provenant des membranes de la première série **s₁** formant le circuit retour et, d'autre part, de refouler le fluide par le passage de communication **24** et le volume **V₂,** afin d'alimenter les membranes de la deuxième série **s₂** formant le circuit aller de la boucle de circulation.

Selon une autre caractéristique de l'objet de l'invention, le dispositif **2** comporte une entrée **E** pour le fluide à traiter qui débouche dans la première chambre de communication **11** du carter, entre la turbine **23** de la pompe de circulation et les éléments de filtration **3** de la série formant le circuit retour de la boucle de circulation, à savoir les éléments de filtration de la première série **s₁** dans l'exemple illustré à la **fig. 1****.**

Selon une autre caractéristique avantageuse, la deuxième chambre de communication **12** est aménagée dans le fond de fermeture **14** qui est équipé dans l'exemple illustré d'une sortie **S** d'évacuation du rétentat. La deuxième chambre de communication **12** est délimitée par la plaque de positionnement **4** voisine et assure la communication entre les éléments de filtration **3** de la deuxième série **s₂** et les éléments de filtration **3** de la première série **s₁.**

Le fonctionnement du dispositif **1,** décrit aux **fig. 1** et **2****,** découle directement de la description qui précède. Le fluide à traiter arrive par l'entrée **E** dans le volume **V₁** et se trouve aspiré sous l'effet du fonctionnement de la turbine **23** dans les éléments de filtration **3** de la deuxième série **s₂** en ayant, au préalable, passé dans le volume **V₂,** via le passage de communication **24.** Le fluide traverse les éléments de filtration **3** de la deuxième série **s₂** qui forment ainsi le circuit aller de la boucle de circulation pour déboucher dans la deuxième chambre de communication **12** pour être distribué, d'une part, dans la sortie **S** d'évacuation du rétentat et, d'autre part, sous l'effet de l'aspiration de la turbine, à travers les éléments de filtration **3** de la première série **s₁** qui forment le circuit retour de la boucle de circulation. Le fluide ayant circulé à travers les éléments de filtration **3** de la première série **s₁** est récupéré dans le volume **V₁.** Le cycle de filtration se poursuit selon la description qui précède.

Dans l'exemple illustré aux **fig. 1** et **2****,** l'entrée **E** pour le fluide débouche dans le volume **V₁** de la première chambre de communication **11,** située à l'intérieur des moyens de séparation. Selon cet exemple, de réalisation, l'entrée **E** comporte un élément tubulaire **30** traversant le boîtier **13,** le volume **V₂** de la chambre de communication **11** et les moyens de séparation **15,** afin de déboucher dans le volume **V₁** délimité à l'intérieur des moyens de séparation **15.** Selon un exemple de réalisation, les moyens de séparation **15** comportent un stator **15₁** de forme tubulaire, à l'intérieur duquel est montée la turbine **23.** Les moyens de séparation **15** comportent également un corps tubulaire **15₂** prolongeant le stator **15₁** et monté, de manière étanche, sur la plaque de positionnement voisine **4** mais, également, sur le stator **15₁.** De préférence, ce corps tubulaire **15₂** est pourvu d'une garniture métallique sur laquelle s'appuie la turbine. Cette garniture assure ainsi l'étanchéité entre le stator et le corps tubulaire, ainsi que la rotation de la turbine. Le corps tubulaire **15₂** possède une hauteur suffisante permettant le montage de l'élément tubulaire **30** qui est monté radialement sur le corps tubulaire **15₂.** L'élément tubulaire **30** débouche ainsi à l'intérieur du corps tubulaire **15₂,** entre la sortie des éléments de filtration **3** de la première série **s₁** et la turbine **23** montés à l'intérieur des moyens de séparation **15** c'est-à-dire dans le premier volume **V₁.**

L'élément tubulaire **30** est ainsi accessible de l'extérieur du carter, de manière à pouvoir être relié à un conduit de raccordement. Il est à noter que le corps tubulaire **15₂** peut être pourvu d'une collerette de montage en appui sur la paroi interne du boîtier **13.** Cette collerette, qui s'étend ainsi radialement entre le corps tubulaire **15₂** et le boîtier **13,** est munie de passages pour le fluide circulant à l'intérieur du volume **V₂.**

Dans l'exemple qui précède, la pompe aspire le fluide à travers les éléments de filtration de la première série **s₁** et rejette le fluide à travers les éléments de filtration de la deuxième série **s₂.** Bien entendu, par inversion du sens de rotation de la turbine, il peut être prévu d'aspirer à travers les éléments de filtration **3** de la deuxième série **s₂** et de refouler le fluide à travers les éléments de filtration **3** de la première série **s₁.**

Selon cette variante de réalisation illustrée à la fig. 3, les éléments de filtration **3** de la première série **s₁** sont alimentés par le premier volume **V₁** formant ainsi le circuit aller de la boucle de circulation. En sortie des éléments de filtration **3** de la première série **s₁,** le fluide est réparti, d'une part, dans la sortie d'évacuation **S** du rétentat et, d'autre part, dans les éléments de filtration **3** de la deuxième série **s₂** qui forment le circuit retour. Le fluide pénètre dans le deuxième volume **V₂** en sortie des éléments de filtration **3** de la deuxième série **s₂.**

Dans cet exemple de réalisation, l'entrée **E** du fluide débouche dans le deuxième volume **V2**, c'est-à-dire entre la turbine **23** et les éléments de filtration **3** de la deuxième série **s₂** formant le circuit retour de la boucle de circulation. Ainsi, le fluide du deuxième volume **V₂,** provenant de l'entrée **E** et de la sortie des éléments de filtration de la deuxième série **s₂** est aspiré par la turbine **23** via le passage de communication **24.**

Dans l'un ou l'autre de ces exemples de réalisation, l'entrée **E** du fluide à traiter est située en amont de la turbine **23** de la pompe de circulation. Dans ces conditions, la pression au niveau de l'entrée **E** peut être inférieure à la pression de sortie de la pompe de circulation.

Dans l'exemple de réalisation illustré à la **Fig. 3****,** l'entrée **E** pour le fluide à traiter comporte un raccord tubulaire **31** traversant le boîtier **13** pour être accessible de l'extérieur du carter et déboucher à l'extérieur des moyens de séparation **15.** Dans l'exemple illustré, les moyens de séparation **15** comportent le stator **15₁** et le corps tubulaire **15₂.** Il est à noter que le corps tubulaire **15₂** peut être supprimé selon cette variante de réalisation.

Dans l'exemple illustré à la **fig. 1****,** la sortie d'évacuation du rétentat **S** communique avec la deuxième chambre de communication **12.** Il est à noter que cette sortie d'évacuation du rétentat **S** peut être aménagée pour communiquer avec la première chambre de communication **11** dans laquelle débouche également l'entrée **E** du fluide à traiter. Dans l'exemple illustré à la **Fig. 1****,** la sortie d'évacuation du rétentat **S** peut traverser soit le boîtier **13** pour déboucher dans le deuxième volume **V₂,** soit le boîtier 13 et le corps tubulaire **15₂** pour déboucher dans le premier volume **V₁** en face ou non de l'entrée **E.** Dans l'exemple illustré à la **fig. 3****,** la sortie d'évacuation du rétentat **S** peut traverser le boîtier **13** pour déboucher dans le deuxième volume **V₂,** en face ou non de l'entrée **E.**

L'invention n'est pas limitée aux exemples décrits et représentés car diverses modifications peuvent y être apportées sans sortir de son cadre.

## Revendications

1. Dispositif pour la filtration tangentielle d'un fluide à traiter destiné à être réparti en un filtrat et en un rétentat, le dispositif comportant, dans un carter **(2) :**
■ au moins une entrée **(E)** pour le fluide à traiter,
■ au moins une sortie **(S)** d'évacuation du rétentat,
■ une série d'éléments de filtration **(3)** de forme tubulaire s'étendant parallèlement les uns aux autres en traversant de manière étanche, à chacune de leurs extrémités, une plaque de positionnement **(4),** les éléments de filtration **(3)** comportant chacun au moins un canal de circulation pour le fluide à traiter et assurant la filtration dudit fluide, en vue d'obtenir, à la surface périphérique des éléments de filtration, la sortie du filtrat destiné à être récupéré dans un volume de collecte **(6)** situé entre les plaques de positionnement **(4)** et le carter **(2),**
■ au moins une sortie **(7)** pour le filtrat communiquant avec le volume de collecte **(6)** du filtrat,
■ une première chambre de communication **(11)** dans laquelle débouche l'une des extrémités des éléments de filtration et dans laquelle sont montés des moyens de séparation **(15),** en contact étanche avec la plaque de positionnement **(4)** voisine, pour diviser ladite chambre en des premier (**V₁**) et deuxième (**V₂**) volumes délimités respectivement à l'intérieur et à l'extérieur des moyens de séparation et communiquant avec, respectivement, une première série (**s₁**) et une deuxième série (**s₂**) d'éléments de filtration **(3)** formant des circuits aller et retour d'une boucle de circulation pour le fluide à traiter, les moyens de séparation comportant un passage de communication **(24),** entre le deuxième volume (**V₂**) et le premier volume (**V₁**), à l'intérieur duquel est montée une turbine **(23)** d'une pompe de circulation, munie d'un axe d'entraînement **(25)** s'étendant à l'extérieur de la première chambre **(11)** pour être reliée à un moteur d'entraînement **(26),**
■ et une deuxième chambre de communication **(12)** dans laquelle débouche l'autre des extrémités des éléments de filtration et assurant une communication pour le fluide à traiter, entre les éléments de filtration de la première série (**s₁**) et ceux de la deuxième série (**s₂**),
**caractérisé en ce que** l'entrée **(E)** pour le fluide à traiter débouche dans la première chambre de communication **(11)** du carter entre la turbine **(23)** de la pompe de circulation et les éléments de filtration **(3)** de la série formant le circuit retour de la boucle de circulation.

2. Dispositif selon la revendication 1, **caractérisé en ce que** le moteur d'entraînement de la pompe est piloté de manière que les éléments de filtration **(3)** de la deuxième série (**s₂**), alimentés par le deuxième volume (**V₂**) forment le circuit aller, tandis que les éléments de filtration **(3)** de la première série (**s₁**), débouchant dans le premier volume (**V₁**), forment le circuit retour et **en ce que** l'entrée **(E)** pour le fluide à traiter débouche dans le premier volume (**V₁**) de la première chambre **(11)** entre la sortie des éléments de filtration de la première série (**s₁**) et la turbine **(23)** montée à l'intérieur des moyens de séparation **(15).**

3. Dispositif selon la revendication 1, **caractérisé en ce que** le moteur d'entraînement de la pompe est piloté de manière que les éléments de filtration **(3)** de la première série (**s₁**), alimentés par le premier volume (**V₁**), forment le circuit aller, tandis que les éléments de filtration **(3)** de la deuxième série (**s₂**), débouchant dans le deuxième volume (**V₂**), forment le circuit retour et **en ce que** l'entrée **(E)** pour le fluide à traiter débouche dans le deuxième volume (**V₂**) de la première chambre délimitée à l'extérieur des moyens de séparation **(15)** entre la sortie des éléments de filtration **(3)** de la deuxième série (**s₂**) et la turbine **(23)** montée à l'intérieur des moyens de séparation **(15).**

4. Dispositif selon l'une des revendications 1 à 3, **caractérisé en ce que** les moyens de séparation **(15)** sont montés à l'intérieur d'un boîtier **(13)** pour la pompe, monté sur une plaque de positionnement **(4).**

5. Dispositif selon l'une des revendications 1 à 4, **caractérisé en ce que** les moyens de séparation **(15)** comportent au moins un stator tubulaire (**15₁**), à l'intérieur duquel est montée la turbine **(23)** de la pompe.

6. Dispositif selon la revendication 5, **caractérisé en ce que** le stator tubulaire (**15₁**) est fixé de manière étanche sur la plaque de positionnement voisine **(4).**

7. Dispositif selon la revendication 5, **caractérisé en ce que** le stator tubulaire (**15₁**) est prolongé par un corps tubulaire (**15₂**) monté, de manière étanche, sur la plaque de positionnement voisine **(4).**

8. Dispositif selon la revendication 7, **caractérisé en ce que** le corps tubulaire (**15₂**) est équipé d'une collerette de montage à l'intérieur du boîtier **(13),** cette collerette étant pourvue de passages pour le fluide.

9. Dispositif selon les revendications 2, 4 et 5, **caractérisé en ce que** l'entrée **(E)** pour le fluide à traiter comporte un élément tubulaire **(30)** traversant le boîtier **(13)** et le stator tubulaire (**15₁**) pour être accessible à l'extérieur du carter et déboucher à l'intérieur des moyens de séparation **(15).**

10. Dispositif selon les revendications 3 et 4, **caractérisé en ce que** l'entrée **(E)** pour le fluide à traiter comporte un raccord tubulaire **(31)** traversant le boîtier **(13)** pour être accessible à l'extérieur du carter et déboucher à l'extérieur des moyens de séparation **(15).**

11. Dispositif selon la revendication 1, **caractérisé en ce que** la deuxième chambre de communication **(12)** est délimitée, entre un fond de fermeture **(14)** et la plaque de positionnement ne délimitant pas la première chambre de communication **(11),** cette deuxième chambre **(12)** assurant la récupération du fluide à traiter ayant circulé dans le circuit aller et l'alimentation en fluide pour le circuit retour.

12. Dispositif selon la revendication 11, **caractérisé en ce que** le fond de fermeture **(14),** qui délimite la deuxième chambre de communication **(12),** est équipé de la sortie **(S)** d'évacuation du rétentat.

13. Dispositif selon la revendication 1, **caractérisé en ce que** les plaques de positionnement **(4)** sont reliées entre elles par l'intermédiaire d'une virole **(9)** délimitant le volume de collecte **(6)** du filtrat, la virole **(9)** étant équipée d'au moins une sortie **(7)** pour le filtrat.

14. Dispositif selon les revendications 4, 11 et 13, **caractérisé en ce que** le carter comporte la virole **(9),** le boîtier **(13)** pour la pompe et le fond de fermeture **(14).**

15. Dispositif selon la revendication 1, **caractérisé en ce que** les moyens de séparation **(15)** sont montés de manière que les première et deuxième séries (**s₁, s₂**) d'éléments de filtration **(3)** comportent un nombre sensiblement égal d'éléments de filtration **(3).**

16. Dispositif selon la revendication 1, **caractérisé en ce que** l'axe d'entraînement **(25)** est monté dans l'alignement de l'axe de la virole **(9)** et **en ce que** le moteur d'entraînement **(26)** est supporté par le boîtier **(13).**

17. Dispositif selon la revendication 1, **caractérisé en ce que** la sortie **(S)** d'évacuation du rétentat est aménagée pour communiquer avec la première chambre de communication **(11).**

18. Dispositif selon la revendication 17, **caractérisé en ce que** la sortie **(S)** d'évacuation du rétentat communique soit avec le premier volume (**V₁**) de la première chambre **(11)** en traversant le boîtier **(13)** et les moyens de séparation **(15),** soit avec le deuxième volume (**V₂**) de ladite première chambre.

## Claims

1. A device for cross-flow filtering a fluid for treatment that is to be separated into a filtrate and a retentate, the device comprising in a casing (2):
· at least one inlet (E) for the fluid for treatment;
· at least one outlet (S) for disposing of the retentate;
· a series of filter elements (3) of tubular shape extending parallel to one another and passing in leaktight manner at each end through a respective positioning plate (4), each filter element (3) having at least one channel for passing a flow of the fluid for treatment and for filtering said fluid in order to obtain, at the peripheral surface of the filter element, delivery of the filtrate for recovery in a collection volume (6) situated between the positioning plates (4) and the casing (2);
· at least one filtrate outlet (7) communicating with the filtrate collection volume (6);
· a first communication chamber (11) into which one end of each filter element opens out and in which separator means (15) are mounted in leaktight contact with the adjacent positioning plate (4) in order to subdivide said chamber into first and second volumes (V₁ and V₂) defined respectively inside and outside the separator means and communicating respectively with a first series (s₁) and with a second series (s₂) of filter elements (3) forming go and return circuits of a circulation loop for the fluid for treatment, the separator means including a communication passage (24) between the second volume (V₂) and the first volume (V₁), with a spinner (23) of a circulation pump being mounted therein, the spinner having a drive shaft (25) extending outside from the first chamber (11) for connection to a drive motor (26); and
· a second communication chamber (12) into which the other end of the filter elements open out, thereby providing the fluid for treatment with communication between the filter elements of the first series (s₁) and the filter elements of the second series (s₂);
the device being **characterized in that** the inlet (E) for the fluid for treatment opens out into the first communication chamber (11) of the casing between the spinner (23) of the circulation pump and the filter elements (3) of the series forming the return circuit of the circulation loop.

2. A device according to claim 1, **characterized in that** the pump drive motor is controlled in such a manner that the filter elements (3) of the second series (s₂) that are fed from the second volume (V₂) form the go circuit, while the filter elements (3) of the first series (s₁) that open out into the first volume (V₁) form the return circuit, and **in that** the inlet (E) for the fluid for treatment opens out into the first volume (V₁) of the first chamber (11) between the outlet from the filter elements of the first series (s₁) and the spinner (23) mounted inside the separator means (15).

3. A device according to claim 1, **characterized in that** the pump drive motor is controlled in such a manner that the filter elements (3) of the first series (s₁) that are fed by the first volume (V₁) form the go circuit, while the filter elements (3) of the second series (s₂) that open out into the second volume (V₂) form the return circuit, and **in that** the inlet (E) for the fluid for treatment opens out into the second volume (V₂) of the first chamber defined outside the separator means (15) between the outlets from the filter elements (3) of the second series (s₂) and the spinner (23) mounted inside the separator means (15).

4. A device according to any one of claims 1 to 3, **characterized in that** the separator means (15) are mounted inside a housing (13) for the pump, the housing being mounted on one of the positioning plates (4).

5. A device according to any one of claims 1 to 4, **characterized in that** the separator means (15) include at least one tubular stator (15₁) having the spinner (23) of the pump mounted therein.

6. A device according to claim 5, **characterized in that** the tubular stator (15₁) is fastened in leaktight manner to the adjacent positioning plate (4).

7. A device according to claim 5, **characterized in that** the tubular stator (15₁) is extended by a tubular body (15₂) mounted in leaktight manner on the adjacent positioning plate (4).

8. A device according to claim 7, **characterized in that** the tubular body (15₂) is fitted with a mounting collar inside the housing (13), said collar being provided with passages for passing the fluid.

9. A device according to claims 2, 4, and 5, **characterized in that** the inlet (E) for the fluid for treatment includes a tubular element (30) passing through the housing (13) and the tubular stator (15₁) so as to be accessible from outside the casing and opening out into the inside of the separator means (15).

10. A device according to claims 3 and 4, **characterized in that** the inlet (E) for the fluid for treatment includes a tubular coupling (31) passing through the housing (13) to be accessible from outside the casing and opening out to the outside of the separator means (15).

11. A device according to claim 1, **characterized in that** the second communication chamber (12) is defined between a closure end wall (14) and the positioning plate that does not define the first communication chamber (11), said second chamber (12) serving to recover the fluid for treatment that has passed via the go circuit and the fluid feed for the return circuit.

12. A device according to claim 11, **characterized in that** the closure end wall (14) that defines the second communication chamber (12) is fitted with the outlet (S) for disposing of the retentate.

13. A device according to claim 1, **characterized in that** the positioning plates (4) are interconnected by a shell (9) defining the filtrate collection volume (6), the shell (9) being fitted with at least one outlet (7) for the filtrate.

14. A device according to claims 4, 11, and 13, **characterized in that** the casing comprises the shell (9), the housing (13) for the pump, and the closure end wall (14).

15. A device according to claim 1, **characterized in that** the separator means (15) are mounted in such a manner that the first and second series (s₁, s₂) of filter elements (3) have substantially equal numbers of filter elements (3).

16. A device according to claim 1, **characterized in that** the drive shaft (25) is mounted on alignment with the axis of the shell (9), and **in that** the drive motor (26) is supported by the housing (13).

17. A device according to claim 1, **characterized in that** the outlet (S) for disposing of the retentate is arranged to communicate with the first communication chamber (11).

18. A device according to claim 17, **characterized in that** the outlet (S) for deposing of the retentate communicates either with the first volume (V₁) of the first chamber (11) by passing through the housing (13) and the separator means (15), or else with the second volume (V₂) of said first chamber.

## Patentansprüche

1. Vorrichtung für die Tangentialfiltration eines zu behandelnden Fluids, das in ein Filtrat und in ein Retentat aufgeteilt werden soll, wobei die Vorrichtung in einem Gehäuse (2) folgendes umfaßt:
- wenigstens einen Einlaß (E) für das zu behandelnde Fluid,
- wenigstens einen Auslaß (S) für das Ableiten des Retentats,
- eine Reihe von röhrenförmigen Filterelementen (3), die parallel zueinander verlaufen und dabei an jedem ihrer Enden eine Positionierungsplatte (4) dicht durchqueren, wobei die Filterelemente (3) jeweils wenigstens einen Zirkulationskanal für das zu behandelnde Fluid umfassen und die Filtration des Fluids sicherstellen, um an der Umfangsfläche der Filterelemente das Austreten des Filtrats zu erzielen, das in einem zwischen den Positionierungsplatten (4) und dem Gehäuse (2) befindlichen Sammelraum (6) aufgefangen werden soll,
- wenigstens einen Auslaß (7) für das Filtrat, der mit dem Filtratsammelraum (6) in Verbindung steht,
- eine erste Verbindungskammer (11), in die das eine der Enden der Filterelemente mündet und in der mit der benachbarten Positionierungsplatte (4) in dichtem Kontakt befindliche Trennmittel (15) angebracht sind, um die Kammer in einen ersten Raum (V₁) und einen zweiten Raum (V₂) zu unterteilen, die innerhalb bzw. außerhalb der Trennmittel begrenzt sind und die mit einer ersten Reihe (s₁) bzw. mit einer zweiten Reihe (s₂) von Filterelementen (3) in Verbindung stehen, die Hin- und Rückleitungskreise eines Umlaufsystems für das zu behandelnde Fluid bilden, wobei die Trennmittel einen Verbindungsdurchgang (24) zwischen dem zweiten Raum (V₂) und dem ersten Raum (V₁) umfassen, in welchem ersten Raum eine Turbine (23) einer Umlaufpumpe angebracht ist, die mit einer Antriebsachse (25) versehen ist, welche außerhalb der ersten Kammer (11) verläuft, um mit einem Antriebsmotor (26) verbunden zu werden, und
- eine zweite Verbindungskammer (12), in die das andere der Enden der Filterelemente mündet und die für das zu behandelnde Fluid eine Verbindung zwischen den Filterelementen der ersten Reihe (s₁) und denjenigen der zweiten Reihe (s₂) sicherstellt,
**dadurch gekennzeichnet, daß** der Einlaß (E) für das zu behandelnde Fluid zwischen der Turbine (23) der Umlaufpumpe und den Filterelementen (3) der den Rückleitungskreis des Umlaufsystems bildenden Reihe in die erste Verbindungskammer (11) des Gehäuses mündet.

2. Vorrichtung nach Anspruch 1, **dadurch gekennzeichnet, daß** der Antriebsmotor der Pumpe derart gesteuert wird, daß die Filterelemente (3) der zweiten Reihe (s₂), die über den zweiten Raum (V₂) beaufschlagt werden, den Hinleitungskreis bilden, während die Filterelemente (3) der ersten Reihe (s₁), welche in den ersten Raum (V₁) münden, den Rückleitungskreis bilden, und daß der Einlaß (E) für das zu behandelnde Fluid zwischen dem Auslaß der Filterelemente der ersten Reihe (s₁) und der innerhalb der Trennmittel (15) angebrachten Turbine (23) in den ersten Raum (V₁) der ersten Kammer (11) mündet.

3. Vorrichtung nach Anspruch 1, **dadurch gekennzeichnet, daß** der Antriebsmotor der Pumpe derart gesteuert wird, daß die Filterelemente (3) der ersten Reihe (s₁), welche über den ersten Raum (V₁) beaufschlagt werden, den Hinleitungskreis bilden, während die Filterelemente (3) der zweiten Reihe (s₂), welche in den zweiten Raum (V₂) münden, den Rückleitungskreis bilden, und daß der Einlaß (E) für das zu behandelnde Fluid zwischen dem Auslaß der Filterelemente (3) der zweiten Reihe (s₂) und der innerhalb der Trennmittel (15) angebrachten Turbine (23) in den außerhalb der Trennmittel (15) begrenzten zweiten Raum (V₂) der ersten Kammer mündet."

4. Vorrichtung nach einem der Ansprüche 1 bis 3, **dadurch gekennzeichnet, daß** die Trennmittel (15) innerhalb eines an einer Positionierungsplatte (4) angebrachten Gehäuses (13) für die Pumpe angeordnet sind.

5. Vorrichtung nach einem der Ansprüche 1 bis 4, **dadurch gekennzeichnet, daß** die Trennmittel (15) wenigstens einen röhrenförmigen Stator (15₁) umfassen, in dem die Turbine (23) der Pumpe angebracht ist.

6. Vorrichtung nach Anspruch 5, **dadurch gekennzeichnet, daß** der röhrenförmige Stator (15₁) an der benachbarten Positionierungsplatte (4) dicht befestigt ist.

7. Vorrichtung nach Anspruch 5, **dadurch gekennzeichnet, daß** der röhrenförmige Stator (15₁) durch einen röhrenförmigen Körper (15₂) verlängert ist, der an der benachbarten Positionierungsplatte (4) dicht angebracht ist.

8. Vorrichtung nach Anspruch 7, **dadurch gekennzeichnet, daß** der röhrenförmige Körper (15₂) mit einem Kragen für die Montage in dem Gehäuse (13) ausgestattet ist, wobei dieser Kragen mit Durchgängen für das Fluid versehen ist.

9. Vorrichtung nach den Ansprüchen 2, 4 und 5, **dadurch gekennzeichnet, daß** der Einlaß (E) für das zu behandelnde Fluid ein röhrenförmiges Element (30) umfaßt, welches das Gehäuse (13) und den röhrenförmigen Stator (15₁) durchgreift, um außerhalb des Gehäuses zugänglich zu sein und um innerhalb der Trennmittel (15) auszumünden.

10. Vorrichtung nach den Ansprüchen 3 und 4, **dadurch gekennzeichnet, daß** der Einlaß (E) für das zu behandelnde Fluid einen röhrenförmigen Anschlußstutzen (31) umfaßt, welcher das Gehäuse (13) durchgreift, um außerhalb des Gehäuses zugänglich zu sein und um außerhalb der Trennmittel (15) auszumünden.

11. Vorrichtung nach Anspruch 1, **dadurch gekennzeichnet, daß** die zweite Verbindungskammer (12) zwischen einem Verschlußboden (14) und der nicht die erste Verbindungskammer (11) begrenzenden Positionierungsplatte begrenzt ist, wobei diese zweite Kammer (12) das Auffangen des zu behandelnden Fluids, welches in dem Hinleitungskreis zirkulierte, sowie die Fluidversorgung für den Rückleitungskreis sicherstellt.

12. Vorrichtung nach Anspruch 11, **dadurch gekennzeichnet, daß** der Verschlußboden (14), welcher die zweite Verbindungskammer (12) begrenzt, mit dem Auslaß (S) für das Ableiten des Retentats ausgestattet ist.

13. Vorrichtung nach Anspruch 1, **dadurch gekennzeichnet, daß** die Positionierungsplatten (4) mittels eines den Filtratsammelraum (6) begrenzenden Mantels (9) untereinander verbunden sind, wobei der Mantel (9) mit wenigstens einem Auslaß (7) für das Filtrat ausgestattet ist.

14. Vorrichtung nach den Ansprüchen 4, 11 und 13, **dadurch gekennzeichnet, daß** das Gehäuse den Mantel (9), das Gehäuse (13) für die Pumpe und den Verschlußboden (14) umfaßt.

15. Vorrichtung nach Anspruch 1, **dadurch gekennzeichnet, daß** die Trennmittel (15) derart angeordnet sind, daß die erste und die zweite Reihe (s₁, s₂) von Filterelementen (3) eine im wesentlichen gleiche Anzahl von Filterelementen (3) aufweist.

16. Vorrichtung nach Anspruch 1, **dadurch gekennzeichnet, daß** die Antriebsachse (25) in der Flucht der Achse des Mantels (9) angebracht ist, und daß der Antriebsmotor (26) von dem Gehäuse (13) getragen wird.

17. Vorrichtung nach Anspruch 1, **dadurch gekennzeichnet, daß** der Auslaß (S) für das Ableiten des Retentats angeordnet ist, um mit der ersten Verbindungskammer (11) in Verbindung zu stehen.

18. Vorrichtung nach Anspruch 17, **dadurch gekennzeichnet, daß** der Auslaß (S) für das Ableiten des Retentats entweder - unter Durchqueren des Gehäuses (13) und der Trennmittel (15) - mit dem ersten Raum (V₁) der ersten Kammer (11) oder mit dem zweiten Raum (V₂) der ersten Kammer in Verbindung steht.
